# EUROPÄISCHE PATENTSCHRIFT

(11) **EP 1 262 343 B1**
(45) Veröffentlichungstag und Bekanntmachung des Hinweises auf die Patenterteilung: **11.11.2009**
(21) Anmeldenummer: 02011117.5
(22) Anmeldetag: 18.05.2002
(51) Int. Cl.: B60G 17/08, B60G 17/015

(54) **Verfahren zur Regelung oder Steuerung der Dämpferkraft verstellbarer Dämpfer an Fahrzeugen**
Method for the regulation or control of the damping force of an adjustable vehicle damper
Procédé pour réguler ou commander la force d'amortissement d'un amortisseur réglable de véhicule

(30) Priorität: 01.06.2001 DE 10126933
(43) Veröffentlichungstag der Anmeldung: 04.12.2002
(73) Patentinhaber: Continental Aktiengesellschaft, 30165 Hannover (DE)
(72) Erfinder: Stiller, Alexander, Dr., 30823 Garbsen (DE)

(56) Entgegenhaltungen:
- EP-A- 0 704 328
- DE-A1- 3 843 137
- DE-A1- 4 116 839

## Beschreibung

Die Erfindung betrifft ein Verfahren zur Regelung oder Steuerung der Dämpferkraft verstellbarer Dämpfer in Fahrzeugen, insbesondere in Kraftfahrzeugen gemäß dem Oberbegriff des Anspruchs 1.

Die Erfindung ist insbesondere für Fahrzeuge mit einer Niveauregulierung oder Luftfederung vorteilhaft einsetzbar.

Die gegenwärtig vorhandenen Dämpfersysteme in Fahrzeugen kann man in drei Gruppen einteilen, nämlich passive, semiaktive und aktive Dämpfersysteme. Bei allen diesen Dämpfersystemen ist die Größe der Dämpfung abhängig von der relativen Geschwindigkeit des Dämpfers. Bei passiven Dämpfersystemen ist die Größe und die Richtung der von dem Dämpfer ausgeübten Kraft nur abhängig von der relativen Geschwindigkeit des Dämpfers. In passiven Dämpfersystemen ist eine Veränderung der Dämpferkraft während des Fahrbetriebes nicht vorgesehen.

Bei semiaktiven Dämpfersystemen kann die Dämpferkraft durch eine Veränderung eines Fluid- bzw. Gasstromes mittels eines Ventils geändert werden. Auf diese Art und Weise können verschiedene Regelungsprogramme mittels eines Stellelementes in Abhängigkeit von der aktuellen Fahrsituation die optimale Dämpferkraft eingestellen. Bei aktiven Dämpfersystemen wird über einen Aktuator die gewünschte Kraft in jeglicher Richtung bereitgestellt, unabhängig von der relativen Geschwindigkeit des Dämpfers.

Aus der DE 196 48 176 A1 ist eine Niveau-Regeleinrichtung mit Steuerung der Schwingungsdämpfer des Fahrwerkes bekannt, bei der zur Steuerung ein Stellsignal verwendet wird, das einem Dämpfungsbedarf für die Bewegung des Fahrzeugaufbaues entspricht. Diesem Dämpfungsbedarf wird eine sogenannte Schlechtweg-Kenngröße hinzugefügt, um die Fahrsicherheit und den Komfort zu verbessern. Die Veränderung der Schwingungsdämpfereinstellung ist dabei durch den Zeitverlauf der Beschleunigung der Ist-Abstände von Rad zu Fahrzeugaufbau bestimmt, wobei die Beschleunigung durch zweifache Differentiation des gemessenen Federweges errechnet wird.

Weiterhin ist es üblich, für die Ermittlung der relativen Dämpfergeschwindigkeit Radbeschleunigungssensoren an den jeweiligen Rädern anzubringen und aufgrund der Beschleunigungssignale die Dämpferregelung vorzunehmen. Dieses Verfahren fordert einen hohen Aufwand bezüglich der Sensorik.

Die gattungsgemäße EP 0 704 328 A1 offenbart ein solches hoch aufwendiges Verfahren und eine zugehörige Vorrichtung zur Steuerung einer Dämpfungskraft. Dabei wird während der Federung die Bewegung der gefederten Masse, d.h. der Karosserie, die Geschwindigkeit der gefederten Masse und die relative Geschwindigkeit zwischen gefederter und ungefederter Masse (Fahrwerk bzw. Räder) ermittelt und aus den enstprechend aufgearbeiteten Signalen auf den jeweiligen Zustand des Ein- oder Ausfederns geschlossen. Abhängig davon werden dann die Dämpfungskräfte durch Eingriff in die Dämpfersteuerung variabel angepasst.

Aufgabe der Erfindung ist es, ein Verfahren bereitzustellen, mit dem ein gattungsgemäßes Verfahren bezüglich der Regelung oder Steuerung der Dämpferkraft verbessert werden kann. Diese Aufgabe wird durch ein Verfahren mit den Merkmalen des Anspruch 1 gelöst, wobei ein erstes Dämpfergeschwindigkeitssignal (v_{ds}) über die Differenzbildung des Abstandssignales (h₁) über ein erstes Zeitintervall und ein zweites Dämpfergeschwindigkeitssignal (v_{dl}) über die Differenzbildung des Abstandssignales (hᵢ) über ein zweites Zeitintervall ermittelt wird, daß das erste Zeitintervall kleiner als das zweite Zeitintervall ist und daß anhand festgelegter Parameter eine Auswahl getroffen wird, welches der Dämpfergeschwindigkeitssignale (v_{ds}; v_{dl}) der Regelung oder Steuerung der Dämpferkraft (F_{D}) zugrundegelegt wird.

Durch die Regelung bzw. Steuerung in Abhängigkeit von der Dämpfergeschwindigkeit und der Ermittlung der Dämpfergeschwindigkeitssignale mittels Abstandssensoren und Differenzbildung der von den Sensoren generierten Signale über eine festgelegte Zeitdifferenz kann auf gegebenenfalls bereits vorhandene Abstandssensoren einer Niveauregelung bzw. Luftfederung zurückgegriffen werden. Weiterhin kann statt der teuren Beschleunigungssensoren auf preiswerte Abstandssensoren zurückgegriffen werden. Abstandssensoren zur Geschwindigkeitsmessung müssen nicht kalibriert werden, hingegen muß bei Beschleunigungssensoren eine Offsetkompensation erfolgen. Zudem liefern Beschleunigungssensoren ungenaue Signale bei zusätzlich einwirkenden Längs- und Querbeschleunigungen.

Für eine optimale Einstellung des Fahrwerkes bzw. der Dämpferkraft wird die Dämpfergeschwindigkeit für jedes zu dämpfende Bauteil, insbesondere für jedes Rad bzw. für jede Radaufhängung eines Fahrzeuges, einzeln ermittelt. Auf diese Weise wird ein Höchstmaß an Komfort und Sicherheit, insbesondere Fahrsicherheit, gewährleistet, da jedes Bauteil oder Rad optimal gedämpft wird.

Um möglichst geringen Rechenaufwand betreiben zu müssen, messen die Abstandssensoren die Entfernung zwischen einem Rad und dem Fahrzeugaufbau, so dass die relative Dämpfergeschwindigkeit sich sehr einfach aus zwei Abstandssignalen und der Zeit zwischen diesen beiden Signalen ermitteln lässt. Dabei ist Voraussetzung, dass die Signale digitalisiert werden, um eine entsprechende Regelung oder Steuerung durchzuführen.

In einer Weiterbildung der Erfindung ist vorgesehen, dass nicht nur ein Dämpfergeschwindigkeitssignal über die Differenzbildung des Abstandssignales über ein Zeitintervall ermittelt wird, sondern dass ebenfalls ein zweites Dämpfergeschwindigkeitssignal auf diese Weise ermittelt wird, allerdings über ein zweites Zeitintervall, das größer als das Zeitintervall des ersten Dämpfergeschwindigkeitssignales ist. Durch die unterschiedlichen Längen der Zeitintervalle bei der Errechnung der jeweiligen Dämpfergeschwindigkeitssignale werden verschiedene Genauigkeiten erzielt, wobei die Dämpfergeschwindigkeit, die über ein längeres Zeitintervall ermittelt wurde, eine höhere Genauigkeit aufweist. Allerdings ist das zweite, über ein längeres Zeitintervall ermittelte Dämpfergeschwindigkeitssignal langsamer und entsprechend für ein schnelles Eingreifen weniger geeignet. Das erste Dämpfergeschwindigkeitssignal, ermittelt über ein kurzes Zeitintervall, ist ungenauer, jedoch kann sehr schnell aufgrund der kurzen Taktung auf Veränderungen bzw. einwirkende äußere Kräfte über eine entsprechende Veränderung der Dämpferkraft reagiert werden. Anhand festgelegter Parameter bzw. Kenngrößen wird dann eine Auswahl getroffen, ob nun das genaue oder das schnelle Dämpfergeschwindigkeitssignal der weiteren Regelung oder Steuerung der Dämpferkraft zugrunde gelegt wird.

Eine zweckmäßige Ausbildung sieht vor, dass das erste Dämpfergeschwindigkeitssignal über ein Zeitintervall von 0,5 msec bis 5 msec und das zweite Dämpfergeschwindigkeitssignal über ein Zeitintervall von 5 msec bis 50 msec gebildet wird.

Eine einfache und effektive Auswahl des Dämpfergeschwindigkeitssignals erfolgt über die Festlegung eines Schwellenwertes des Betrages des ersten Dämpfergeschwindigkeitssignals. Überschreitet der Betrag des ersten Dämpfergeschwindigkeitssignals einen Schwellenwert überschritten, bedeutet dies, dass eine schnelle Reaktion aufgrund der hohen Vertikalgeschwindigkeit des Rades erforderlich ist. In diesem Fall wird der Regelung oder Steuerung der Dämpferkraft das erste, also schnelle und ungenaue Dämpfergeschwindigkeitssignal zugrunde gelegt. Anderenfalls kann auf eine schnelle Regelung oder Steuerung verzichtet werden, so dass das genauere Dämpfergeschwindigkeitssignal, das über ein längeres Zeitintervall ermittelt wurde, verwendet werden kann.

Um den Regelaufwand möglichst gering zu halten und insbesondere um unnötige Verstellbewegung des Ventiles zur Steuerung der Durchflussmenge im Dämpfer zu verhindern, ist eine Filterung des Abstandssignales über einen ersten und einen zweiten Tiefpassfilter vorgesehen, wobei die beiden Tiefpassfilter unterschiedliche Zeitkonstanten haben und dementsprechend unterschiedliche Ausgangssignale generieren, die der weiteren Berechnung für die Dämpfergeschwindigkeitssignale zugrunde gelegt werden. Für die Bildung der Gescwindigkeitssignale mit unterschiedlichen Abtastzeiten haben diese Filter zudem die Funktion eines "Antialiasing-Filters". Der erste Tiefpassfilter weist eine Zeitkonstante von 0,25 msec bis 2,5 msec und der zweite Tiefpassfilter weist eine zweite Zeitkonstante in einem Bereich von 2,5 msec bis 25 msec auf. Diese Zeitkonstanten entsprechen der Hälfte des jeweiligen Zeitintervalles für die Ermittlung der Dämpfergeschwindigkeitssignale.

Eine Alternative der Auswahl, welches Dämpfergeschwindigkeitssignal der Steuerung oder Regelung der Dämpferkraft zugrunde gelegt werden soll, besteht darin, dass aus dem Abstandssignal zwei Ausgangssignale über zwei Tiefpassfilter mit verschiedener Zeitkonstante herausgefiltert werden. Der Betrag des Differenzsignals zwischen dem ersten und dem zweiten Ausgangssignal wird nunmehr als Parameter verwendet, anhand dessen eine Auswahl des Dämpfergeschwindigkeitssignals vorgenommen wird. Überschreitet der Betrag des Differenzsignales einen festgelegten Wert, so wird das erste Dämpfergeschwindigkeitssignal, also das schnelle und ungenaue Signal, der weiteren Verarbeitung zugrunde gelegt, ansonsten wird bei Unterschreiten dieses Schwellenwertes das zweite Dämpfergeschwindigkeitssignal mit größerer Auflösung eingesetzt. Die Zeitkonstanten betragen ebenfalls 0,25 msec bis 2,5 msec für den ersten Tiefpassfilter und 2,5 msec bis 25 msec für den zweiten Tiefpassfilter.

Eine Ausgestaltung der Erfindung sieht vor, dass die Dämpferkraft nach dem Skyhook-Verfahren, dem Ground-Hook-Verfahren oder nach einer Kombination dieser Verfahren geregelt wird. Je nach geforderter Präzision ist vorgesehen, dass entweder ein kontinuierliches Regelverfahren angewendet wird, das zwischen einer starken und einer geringen Dämpferkraft quasi stufenlos auswählen kann, oder dass eine sogenannte Ein-Aus-Skyhook-Regelung vorgenommen wird, bei dem zwischen einer niedrigen und einer hohen Dämpfung umgeschaltet wird.

Die bei dem Skyhook- oder dem Ground-Hook-Verfahren benötigte Dämpfergeschwindigkeit für die Berechnung des inversen Dämpferkennfeldes kann aus den ermittelten Dämpfergeschwindigkeitssignalen errechnet werden, und die weiterhin benötigte Aufbaugeschwindigkeit für die Berechnung der relativen Dämpfergeschwindigkeit kann aus einem an dem Aufbau angeordneten Beschleunigungssensor ermittelt werden. Alternativ dazu ist vorgesehen, dass die Aufbaugeschwindigkeit aus einem Dämpfergeschwindigkeitssignal mit herausgefiltertem Radgeschwindigkeitsanteil ermittelt wird. Dabei wird das präzisere Dämpfergeschwindigkeitssignal verwendet und der entsprechende Radgeschwindigkeitsanteil wird herausgefiltert. Die Ermittlung des präzisen Dämpfergeschwindigkeitssignals geschieht nach der oben beschriebenen Methode.

Um die Stellglieder aufgrund ihrer mechanischen Trägheit nicht zu überfordern, ist in einer Weiterbildung der Erfindung ein Hochpassfilter für die Analyse des Abstandssignales vorgesehen, bei dem Schwingungen mit geringen Frequenzen des Rades herausgefiltert eliminiert und hochfrequente Schwingungen durchgelassen werden. Bei Überschreiten eines Grenzwertes der des Ausgangssignals wird auf ein festgelegtes, stark gefiltertes Dämpfergeschwindigkeitssignal umgeschaltet, das zur Erreichung einer möglichst genauen Einstellung der Dämpferkraft vorteilhafterweise über ein großes Zeitintervall ermittelt wird. Dadurch wird gewährleistet, dass hochfrequente Störungen, durch die der Dämpfer von hart auf weich bzw. umgekehrt verändert wird, erkannt werden. Über die Umschaltung auf das stark gedämpfte Signal werden so die Stellglieder mechanisch geschont und die Schaltgeräusche aufgrund häufigen Umschaltens verringert.

Ein Ausführungsbeispiel der Erfindung wird anhand der beigefügten Figuren näher erläutert. Es zeigen:
- Figur 1 -: ein Blockschaltbild eines Regelungsverfahrens zur Einstellung der Dämpferkraft;
- Figur 2 -: ein Blockschaltbild zur Ermittlung eines Dämpfergeschwindigkeitssig- nals aus einem Abstandssignal;
- Figur 3 -: eine Prinzipdarstellung der Skyhook-Regelung;
- Figur 4a -: eine Dämpferkennlinie eines passiven Dämpfersystems;
- Figur 4b -: ein Dämpferkennfeld eines semiaktiven Dämpfersystems; sowie
- Figur 5 -: ein Beispiel für den Verlauf einer Regelung.

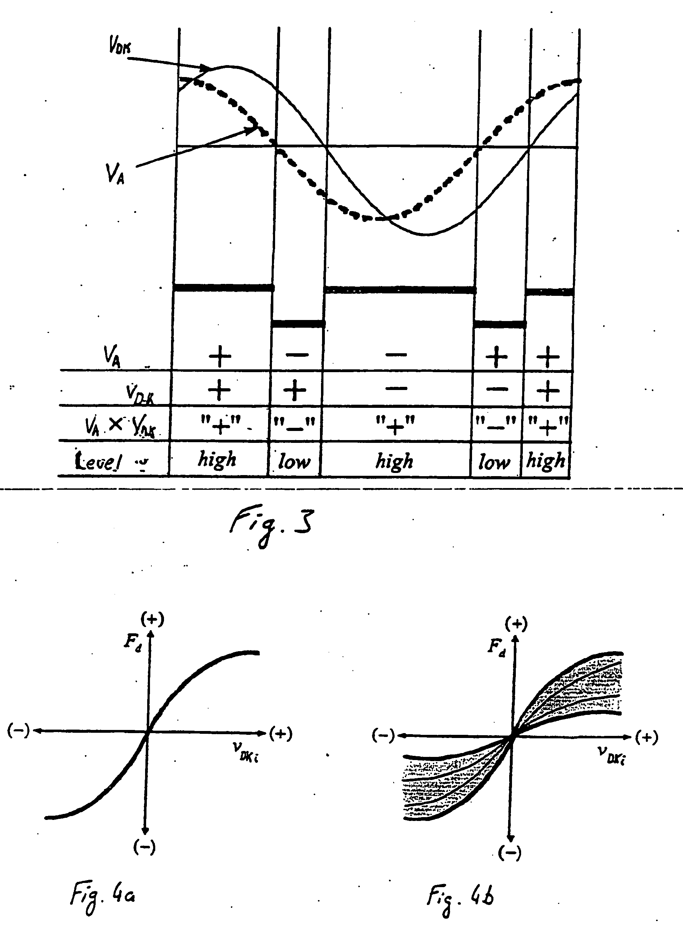

Die Figur 4a zeigt eine Dämpferkennlinie eines passiven Dämpfersystemes in Abhängigkeit von den Größen Dämpferkraft F_{d} und Dämpfergeschwindigkeit V_{DK}. Unter der Dämpfergeschwindigkeit V_{DK} wird nachfolgend die relative Dämpfergeschwindigkeit verstanden, also die Geschwindigkeit, die der Dämpfer aufweist, wenn das zu dämpfende Bauteil sich gegenüber dem entsprechenden Bauteil bewegt. In einem Fahrzeug wären dies die Bewegung des Rades relativ zu dem Fahrzeugaufbau. Die Dämpferkennlinie gemäß Figur 4a zeigt für kleine Dämpfergeschwindigkeiten V_{DK} einen nahezu linearen Verlauf, der sich für hohe Dämpfergeschwindigkeiten V_{DK} einen Grenzwert annähert. Eine Verstellung bzw. gewollte Veränderung der Dämpferkennlinie bei passiven Dämpfersystemen ist nicht vorgesehen.

In der Figur 4b ist ein Dämpferkennfeld eines semiaktiven Dämpfersystemes dargestellt, bei dem in Abhängigkeit von der Dämpfergeschwindigkeit V_{DK} zwischen zwei Grenzwerten jeweils eine Vielzahl an Werten für die Dämpferkraft eingestellt werden kann. Während bei einem diskreten Regelungssystem zwischen dem Maximal- und dem Minimalwert umgeschaltet werden kann, besteht bei einem kontinuierlichen Regelsystem die Möglichkeit, einen beliebigen Wert zwischen den Grenzwerten auszuwählen und dadurch eine optimale Anpassung der Dämpferkraft auf die jeweilige Belastung vorzunehmen.

Ein Beispiel eines solchen diskreten Regelungsverfahrens ist in der Figur 3 grundsätzlich dargestellt, bei dem aus der Dämpfergeschwindigkeit V_{DK} und der Aufbaugeschwindigkeit V_{A} das Produkt gebildet wird. Die Aufbaugeschwindigkeit V_{A} bezeichnet hier nicht die Fahrgeschwindigkeit, sondern die vertikale Geschwindigkeit des Fahrzeugaufbaues. Anhand dieses Schaubildes wird das Skyhook-Regelverfahren erläutert. Wenn die relative Dämpfergeschwindigkeit V_{DK} positiv ist, wirkt die Dämpferkraft des passiven Dämpfers der Bewegung entgegen und "zieht" die Dämpferkraft den Fahrzeugaufbau nach unten; ist die relative Dämpfergeschwindigkeit V_{DK} negativ; "drückt" die Dämpferkraft den Fahrzeugaufbau nach oben. Wenn also die vertikale Geschwindigkeit VA des Fahrzeugaufbaues negativ ist, bewegt sich der Fahrzeugaufbau nach unten und ein maximaler Wert der Dämpfung ist gewünscht, um den Aufbau nach oben zu drücken. Ein solches Beispiel ist in dem dritten Abschnitt der Figur 3 dargestellt, wo durch die jeweiligen Balken und die Bezeichnung "high" und "low" der Grad der Dämpfung angezeigt ist. Bewegt sich hingegen der Fahrzeugaufbau nach oben, also ist V_{A} positiv, wird ein maximaler Wert der Dämpfung angestrebt wenn V_{DK} positiv ist, um die Fahrzeugaufbaubewegung nach oben zu unterdrücken, während ein minimaler Wert der Dämpfung bei positivem V_{A} angestrebt ist, wenn V_{DK} negativ ist, um die Fahrzeugaufbaubewegung weiter nach oben nicht weiter zu unterstützen. Das entsprechende Verhalten gilt bei negativer Aufbaugeschwindigkeit. Die beschriebene Skyhook-Regelung simuliert die ideale Regelungskonfiguration einer Körperverlagerung mit einem passiven Dämpfer, der zwischen dem Fahrzeugaufbau und einem fiktiven, außerhalb des Fahrzeugs angeordneten Gegenlager angeordnet ist.

Neben dem Umschalten zwischen einer hohen und einer geringen Dämpfung, wie in der Figur 3 dargestellt, ist es über ein kontinuierliches Regelverfahren selbstverständlich möglich, Zwischenwerte einzustellen.

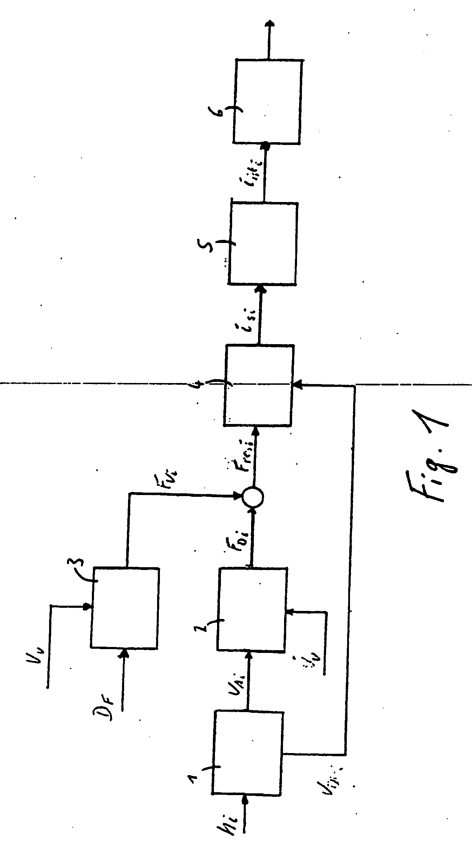

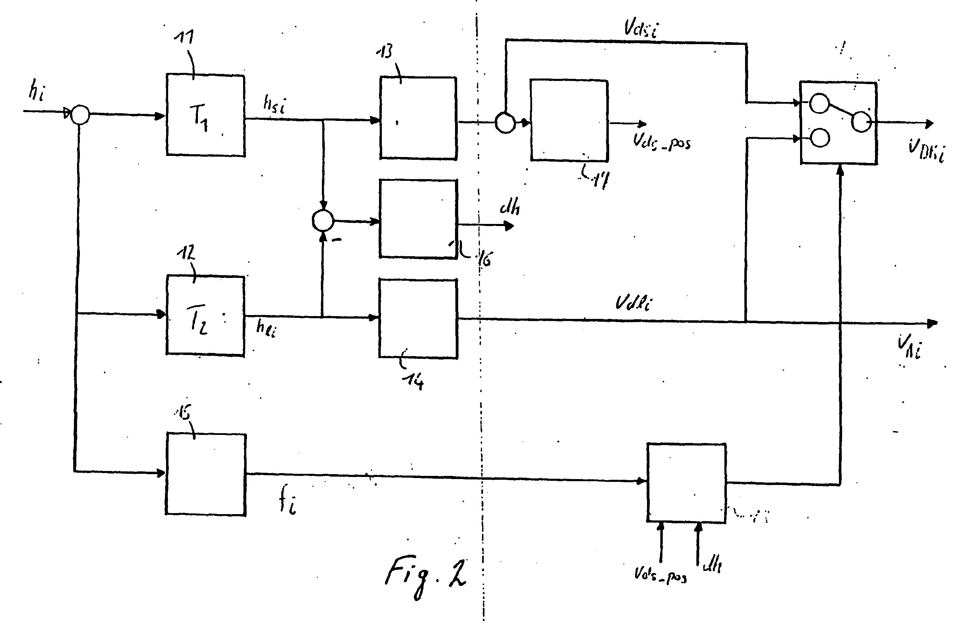

In der Figur 1 ist ein Blockschaltbild zur Regelung der Stellung eines Dämpferventiles 6 gezeigt, über welches die Dämpferkraft verändert werden kann. Als Eingangsgröße dient das Abstandssignal hi, wobei nachfolgend der Index i das jeweils zu dämpfende Bauteil bezeichnet; bei einem Fahrzeug ist dies insbesondere ein Rad. In einer Geschwindigkeitsermittlungseinheit 1, dessen Funktionsweise im Detail nachfolgend unter der Figur 2 beschrieben ist, wird die Aufbaugeschwindigkeit V_{Ai} und die Dämpfergeschwindigkeit V_{DK} ermittelt. Die Aufbaugeschwindigkeit V_{Ai} wird zusammen mit der Fahrzeuggeschwindigkeit V_{V} einer Dämpferkraftvorgabeeinheit 2 zugeführt, in der die benötigte Dämpferkraft anhand der Aufbaugeschwindigkeit V_{Ai} in Verbindung mit der Fahrzeuggeschwindigkeit V_{V} ermittelt wird. Als Ergebnis wird die ermittelte benötigte Dämpferkraft F_{Di} ausgegeben. In einer Kraftvorsteuerungsermittlungseinheit 3 wird aus der Fahrzeuggeschwindigkeit V_{V} und Dynamikfaktoren D_{F} die Vorsteuerungsdämpferkraft F_{Vi} ermittelt.

In die Dynamikfaktoren D_{F} fließen beispielsweise der Bremsdruck, der Lenkwinkel oder beabsichtigte Beschleunigungen des Fahrzeuges ihren Niederschlag. Diese Dynamikfaktoren D_{F} werden beispielsweise direkt an den Bedienelementen wie Lenkrad oder Pedalen abgegriffen, und aufgrund der Trägheit des Gesamtfahrzeuges bezüglich Lenk-, Brems- oder Beschleunigungsaktionen können entsprechende Verlagerungen des Fahrzeugaufbaues vorab abgeschätzt und eine entsprechende Veränderung der Dämpferkraft an dem entsprechenden Dämpfer vorgenommen werden. Als Ergebnis der Kraftvorsteuerung wird die Vorsteuerungsdämpferkraft F_{Vi} ausgegeben, die zusammen mit der aus der Aufbaugeschwindigkeit V_{Ai} und der Fahrzeuggeschwindigkeit Vᵥ ermittelten Dämpferkraft die resultierende angeforderte Dämpferkraft Fᵣₑₛᵢ ergibt.

Die resultierende angeforderte Dämpferkraft Fᵣₑₛᵢ und die Dämpfergeschwindigkeit V_{DKi} werden einem inversen Dämpferkennfeld 4 zugeführt, wo Fᵣₑₛᵢ und V_{DKi} die Eingangsgrößen für die Ermittlung der entsprechenden Kenngröße für den Sollstellstrom iₛᵢ liefert. Der Wert des Sollstellstromes iₛᵢ kann aus dem Kennfeld direkt abgelesene werden, wobei unter Bezugnahme auf die Figur 4b der entsprechende Wert für die Dämpfergeschwindigkeit V_{DKi} eingegeben werden muss. An dem Kreuzungspunkt mit dem entsprechenden Wert für die resultierende angeforderte Dämpferkraft Fᵣₑₛᵢ, die in der Figur 4b die Größe F_{D} ersetzt, muss der entsprechende Wert abgelesen werden.

Aus dem inversen Dämpferkennfeld 4 kann somit direkt der Sollstellstrom iₛᵢ abgelesen werden, der einem Stellglied 5 zugeführt wird, das wiederum den tatsächlich fließenden Strom iₗₛₜᵢ an das Dämpferventil 6 weiterleitet. Durch die Verstellung des Dämpferventiles 6 wird ein Strömungsquerschnitt verändert, wodurch die Dämpferkraft entsprechend der Anforderung variiert wird.

Die für die Berechnung der zunächst ermittelten Dämpferkraft F_{Di} erforderlichen Größen der Aufbaugeschwindigkeit V_{Ai} und der relativen Dämpfergeschwindigkeit V_{DKi} werden aus dem Abstandssignal hᵢ in der Geschwindigkeitsermittlungseinheit 1 errechnet, deren Funktionsweise in der Figur 2 ausführlich dargestellt ist.

In dem Ausführungsbeispiel wird das Abstandssignal hᵢ einem ersten Tiefpassfilter 11, einem zweiten Tiefpassfilter 12 sowie einem Hochpassfilter 15 zugeleitet. Der erste Tiefpassfilter weist eine Zeitkonstante T₁ zur Ermittlung eines ersten Ausgangssignals hₛᵢ auf, das an eine Berechnungseinheit 13 zur Berechnung eines ersten Geschwindigkeitssignals V_{dsi} und ebenfalls an eine Verknüpfungsstelle geleitet wird. Der zweite Tiefpassfilter 12 mit einer Zeitkonstante T₂, die größer als die Zeitkonstante T₁ des ersten Tiefpassfilters 11 ist, wird ebenfalls mit dem Abstandssignal hᵢ beaufschlagt und filtert ein zweites Abstandssignal hₗᵢ heraus, das seinerseits einer Berechnungseinheit 14 zur Berechnung des zweiten Geschwindigkeitssignals V_{dii} zugeführt und andererseits mit negativen Vorzeichen der Verknüpfungseinheit zugeführt wird.

In der Verknüpfungseinheit werden das erste gefilterte Abstandssignal hₛᵢ und das mit negativen Vorzeichen versehene zweite gefilterte Abstandssignal hᵢₗ addiert und in der Betragsbildungseinheit 16 wird ein Differenzsignal dh erzeugt, das als Parameter für die Beurteilung der zu verwendenden Dämpfergeschwindigkeitssignale herangezogen wird. Auf welche Art und Weise diese Beurteilung erfolgt, wird später erläutert.

Das zweite Dämpfergeschwindigkeitssignal V_{dii} wird sowohl einem Schalter 19 als auch, wie in der Figur 1 ersichtlich, der Dämpferkraftvorgabeeinheit 2 zugeführt, aus der dort in Zusammenhang mit der Fahrzeuggeschwindigkeit Vᵥ die erste ermittelte Dämpferkraft F_{Di} errechnet wird.

Das erste Dämpfergeschwindigkeitssignal V_{dsi} wird ebenfalls dem Schalter 19 zugeführt und darüber hinaus einer Betragsbildungseinheit 17 zur Bildung des Betrags V_{ds-pos} ermittelt wird.

Schließlich wird das Abstandssignal hᵢ einem Hochpassfilter 15 zugeführt, der die Radschwingungen, die nicht mehr effektiv vom Stellglied gestellt werden können, selektiert. Der Hochpassfilter 15 gibt ein Signal fᵢ aus, das an eine Logikeinheit 18 weitergeleitet wird.

Ebenfalls an diese Logikeinheit 18 werden die aus den Betragsermittlungseinheiten 16 und 17 ermittelten Größen des Differenzsignals dₕ und des Betrages des ersten Dämpfergeschwindigkeitssignals V_{ds-pos} geleitet. Anhand der eingehenden Größen wird in dieser Logikeinheit 18 entschieden, welches Signal an den Schalter 19 übermittelt werden soll. Die Entscheidung, welche der Dämpfergeschwindigkeitssignale der weiteren Verarbeitung zugrunde gelegt werden sollen, wird anhand der Bewertung dieser eingehenden Größen getroffen. Sofern der Betrag des ersten Geschwindigkeitssignals größer als ein erster Kennwert oder das Differenzsignal größer als ein zweiter Kennwert und das Signal fᵢ geringer als ein Grenzwert ist, wird als Dämpfergeschwindigkeit V_{DKi} das erste Geschwindigkeitssignal V_{ds} gesetzt. Sofern diese Logikbedingung nicht erfüllt ist, wird als relative Dämpfergeschwindigkeit V_{DK} der Wert des zweiten Dämpfergeschwindigkeitssignals V_{dl} genommen, das über eine längere Zeitkonstante ermittelt wurde. Diese relative Dämpfergeschwindigkeit V_{DKi} wird dann gemäß der Figur 1 dem inversen Dämpferkennfeld 4 als Eingangsgröße zugeführt.

Insbesondere bei der Anwendung des Skyhook-Prinzips ist es erforderlich, dass die Dämpfergeschwindigkeit im Radfrequenzbereich mit möglichst geringen Phasenverzug ermittelt wird. Dies ist mit dem oben geschilderten Verfahren sehr gut möglich, weil bei großen Dämpfergeschwindigkeiten eine dynamisch schnelle aber dafür nicht so genaue erste Dämpfergeschwindigkeit V_{dsi} genommen wird und ansonsten die genauere, dafür aber dynamisch trägere zweite Dämpfergeschwindigkeit V_{dli} genutzt wird. Durch den Einsatz des Hochpassfilters 15 fällt eine hochfrequente Anregung des Skyhook-Systems und ein entsprechend hochfrequentes Schalten des Stellgliedes weg, was zu einer Verringerung des Schaltgeräusches führt. Weiterhin wird das Stellglied mechanisch nicht so stark belastet.

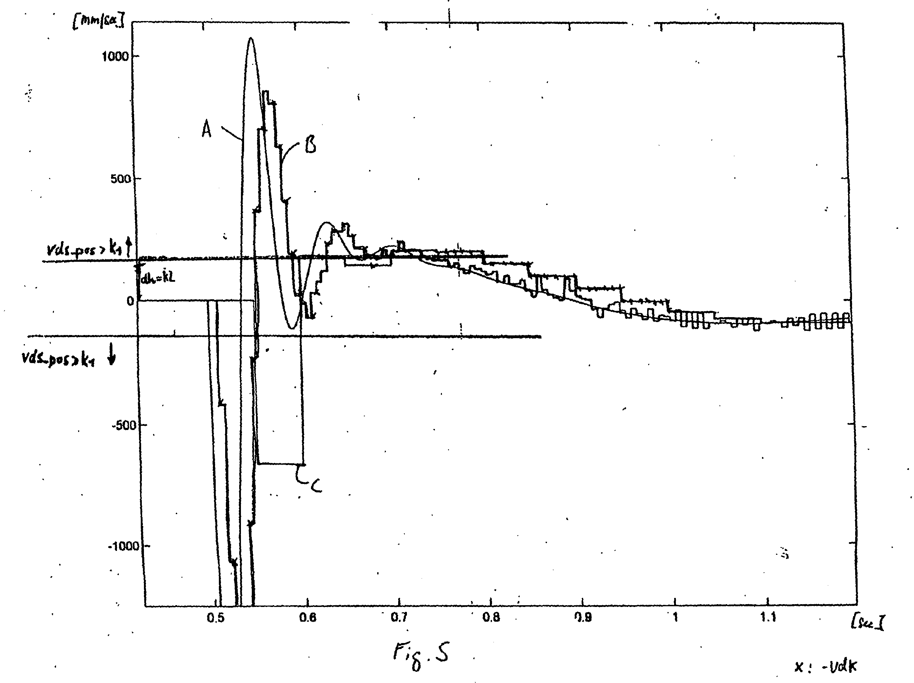

Ein Beispiel für den Verlauf einer Regelung anhand der Dämpfergeschwindigkeit ist in der Figur 5 gezeigt, in der die Kurve A das Geschwindigkeitssignal in kontinuierlicher Messung darstellt. Die Kurve B ist das digitalisierte Geschwindigkeitssignal mit einer entsprechend kurzen Zeittaktung, was eine sehr schnelle Reaktion auf die Geschwindigkeitsveränderungen zulässt. Eine weitere Kurve C ist die digitalisierte Form der Kurve A über ein größeres Zeitintervall, wodurch die geringen Schwankungen um eine Ruhelage besser ausgeglichen werden. Ebenfalls in der Figur 5 eingezeichnet sind einmal die Grenzwerte V_{ds-pos} bei einem Wert von ca. 200 mm/sec sowie das Differenzsignal Dₕ.

In der dargestellten Kurve überschreitet der Betrag V_{ds-pos} den Grenzwert, so dass zur weiteren Regelung der Dämpferkraft das erste Geschwindigkeitssignal V_{dsi} verwendet wird. Nach zwei Nulldurchgängen der Kurve A ist das Differenzsignal kleiner als der vorgegebene Grenzwert, so dass auf das präzisere aber langsamere zweite Dämpfergeschwindigkeitssignal V_{dli} umgeschaltet wird. Auch im weiteren Verlauf der Kurve A wird dann das langsamere Geschwindigkeitssignal V_{dli} zugrunde gelegt, da das Differenzsignal dₕ unterhalb des festgelegten Grenzwertes liegt.

Im weiteren Verlauf der Kurve A wird deutlich, dass durch das große Zeitintervall T₂ ein häufiges Umschalten zwischen einer harten und einer weichen Dämpfung bzw. zwischen verschiedenen Dämpfungszuständen vermieden wird, was der Fall wäre, würde man stets nur die kurze Zeittaktung T₁ mit dem entsprechenden Geschwindigkeitssignal V_{dsi} zugrunde legen. Ein solches schnelles Hin- und Herschalten wäre immer bei dem Über- bzw. Unterschreiten der Kurve B bezüglich der Kurve A notwendig.

## Patentansprüche

1. Verfahren zur Regelung oder Steuerung der Dämpferkraft verstellbarer Dämpfer in Fahrzeugen, insbesondere in Kraftfahrzeugen, mit aktiven oder semiaktiven Dämpfersystemen, bei dem die Regelung oder Steuerung in Abhängigkeit von der Dämpfergeschwindigkeit (V_{DK}) erfolgt und die Dämpfergeschwindigkeitssignale (V_{dl}, V_{ds}) mittels Abstandssensoren und Differenzbildung der Abstandssensorensignale (hi) über eine festgelegte Zeitdifferenz ermittelt werden, **dadurch gekennzeichnet, dass** ein erstes Dämpfergeschwindigkeitssignal (v_{ds}) über die Differenzbildung des Abstandssignales (hᵢ) über ein erstes Zeitintervall und ein zweites Dämpfergeschwindigkeitssignal (v_{di}) über die Differenzbildung des Abstandssignales (hᵢ) über ein zweites Zeitintervall ermittelt wird, daß das erste Zeitintervall kleiner als das zweite Zeitintervall ist und daß anhand festgelegter Parameter eine Auswahl getroffen wird, welches der Dämpfergeschwindigkeitssignale (v_{ds}; v_{dl}) der Regelung oder Steuerung der Dämpferkraft (F_{D}) zugrundegelegt wird.

2. Verfahren nach Anspruch 1, bei dem die Dämpfergeschwindigkeit (v_{di}, v_{ds}) für jedes zu dämpfende Bauteil einzeln ermittelt wird.

3. Verfahren nach Anspruch 1 oder 2, bei dem die Abstandssensoren die Entfernung zwischen einem Rad und dem Fahrzeugaufbau messen.

4. Verfahren nach einem der vorherigen Ansprüche, bei dem das erste Dämpfergeschwindigkeitssignal (v_{ds}) über ein Zeitintervall von 0.5 msec bis 5 msec und das zweite Dämpfergeschwindigkeitssignal (v_{di}) über ein Zeitintervall von 5 msec bis 50 msec gebildet wird.

5. Verfahren nach Anspruch 4, bei dem als Parameter ein festgelegter Schwellenwert des Betrages des ersten Dämpfergeschwindigkeitssignals (v_{ds}) ver-wendet und bei Überschreiten des Schwellenwertes das erste Dämpfergeschwindigkeitssignal (v_{ds}) und ansonsten das zweite Dämpfergeschwindigkeitssignal (v_{dl}) der Regelung oder Steuerung der Dämpferkraft (F_{D}) zugrundegelegt wird.

6. Verfahren nach einem der Ansprüche 4 oder 5, bei dem das Abstandssignal (hᵢ) mit einem ersten Tiefpaßfilter (11) kleiner Zeitkonstante (T1) zur Ermittlung eines ersten Ausgangssignals (hₛ) und mit einem zweiten Tiefpaßfilter (12) größerer Zeitkonstante (T2) zur Ermittlung eines zweiten Ausgangssignals (hₗ) gefiltert wird und diese Ausgangssignale zur Berechnung der Dämpfergeschwindigkeitssignale (v_{ds}, v_{dl}) verwendet werden.

7. Verfahren nach einem der Ansprüche 1 bis 3, bei dem das Abstandssignal (hᵢ) mit einem ersten Tiefpaßfilter (11) kleiner Zeitkonstante (T1) zur Ermittlung eines ersten Ausgangssignals (hₛ) und mit einem zweiten Tiefpaßfilter (12) größerer Zeitkonstante (T2) zur Ermittlung eines zweiten Ausgangssignals (hᵢ) gefiltert wird, daß als Parameter der Betrag eines Differenzsignals (dₕ) zwischen dem ersten und dem zweiten Ausgangssignal (hₛ; hₗ) verwendet und daß anhand eines festgelegten Schwellenwertes des Differenzsignals (dₕ) eine Auswahl getroffen wird, welches der Dämpfergeschwindigkeitssignale (v_{ds}; v_{dl}) der Regelung oder Steuerung der Dämpferkraft zugrundegelegt wird.

8. Verfahren nach Anspruch 7, bei dem bei Überschreiten eines Schwellenwertes für den Betrag des Differenzsignals (dₕ) das erste Dämpfergeschwindigkeitssignal (v_{ds}) und ansonsten das zweite Dämpfergeschwindigkeitssignal (v_{dl}) der Regelung oder Steuerung der Dämpferkraft (F_{D}) zugrundegelegt wird.

9. Verfahren nach Anspruch 7 oder 8, bei dem die kleinere Zeitkonstante (T1) 0.25 msec bis 2,5 msec und die größere Zeitkonstante (T2) 2,5 msec bis 25 msec beträgt.

10. Verfahren nach Anspruch 5 und 8, bei dem bei Überschreiten des Schwellenwertes für den Betrag des Differenzsignals (dₕ) und des als Parameter festgelegten Schwellenwertes des Betrages des ersten Dämpfergeschwindigkeitssignals (v_{ds}) das erste Dämpfergeschwindigkeitssignal (v_{ds}) und ansonsten das zweite Dämpfergeschwindigkeitssignal (v_{dl}) der Regelung oder Steuerung der Dämpferkraft (F_{D}) zugrundegelegt wird.

11. Verfahren nach Anspruch 1 bis 10, bei dem die Dämpferkraft (F_{D}) nach dem Skyhook-Verfahren, nach dem Groundhook-Verfahren oder nach einer Kombination dieser Verfahren geregelt wird.

12. Verfahren nach Anspruch 11, bei dem die Dämpfergeschwindigkeit (V_{DK}) für die Berechnung des inversen Dämpferkennfeldes (4) verwendet und die Aufbaugeschwindigkeit (V_{A}) aus der Integration eines Signals eines am Aufbau angeordneten Beschleunigungssensor ermittelt wird.

13. Verfahren nach Anspruch 11, bei dem die Dämpfergeschwindigkeit (V_{DK}) für die Berechnung des inversen Dämpferkennfeldes (4) verwendet und die Aufbaugeschwindigkeit (V_{A}) aus einem Dämpfergeschwindigkeitssignal (v_{di}) mit herausgefiltertem Radgeschwindigkeitsanteil ermittelt wird.

14. Verfahren nach Anspruch 13, bei dem als Dämpfergeschwindigkeitssignal das zweite Dämpfergeschwindigkeitssignal (v_{dl}) gemäß Anspruch 4 oder 5 verwendet wird.

15. Verfahren nach einem der voranstehenden Ansprüche, bei dem mittels eines Hochpaßfilters (15) Schwingungen mit niedriger Frequenz unterhalb 2 Hz des Abstandssignals (hᵢ) herausgefiltert werden.

16. Verfahren nach Anspruch 15, bei dem für die Berechnung des inversen Dämpferkennfeldes zusätzlich das Dämpfergeschwindigkeitssignal (v_{dl}) herangezogen wird, wenn das Ausgangssignal des Hochpaßfilters (15) einen Grenzwert überschreitet.

## Claims

1. Method for performing closed-loop or open-loop control of the damping force of adjustable dampers in vehicles, in particular in motor vehicles, having active or semi-active damper systems, in which method the closed-loop or open-loop control is performed as a function of the damping speed (V_{DK}), and the damping speed signals (v_{dl}, v_{ds}), are obtained by means of distance sensors and by forming differences between the distance sensor signals (hᵢ) over a defined time difference, **characterized in that** a first damper speed signal (v_{ds}) is obtained by forming differences between the distance signal (hᵢ) over a first time interval, and a second damping speed signal (v_{dl}) is obtained by forming differences between the distance signal (hᵢ) over a second time interval, **in that** the first time interval is shorter than the second time interval, and **in that** on the basis of defined parameters a selection is made as to which of the damping speed signals (v_{ds}; v_{dl}) is used for the closed-loop or open-loop control of the damping force (F_{D}).

2. Method according to Claim 1, in which the damping speed (v_{dl}, v_{ds}) is obtained individually for each component which is to be damped.

3. Method according to Claim 1 or 2, in which the distance sensors measure the distance between a wheel and the vehicle body.

4. Method according to one of the preceding claims, in which the first damping speed signal (v_{ds}) is formed over a time interval of 0.5 msec to 5 msec, and the second damping speed signal (v_{dl}) is formed over a time interval of 5 msec to 50 msec.

5. Method according to Claim 4, in which a defined threshold value of the absolute value of the first damping speed signal (v_{ds}) is used as a parameter, and when the threshold value is exceeded the first damping speed signal (v_{ds}) is used as the basis for the closed-loop or open-loop control of the damping force (F_{D}), and otherwise the second damping speed signal (v_{dl}) is used as the basis for the closed-loop or open-loop control of the damping force (F_{D}) .

6. Method according to one of Claims 4 or 5, in which the distance signal (hᵢ) is filtered with a first low-pass filter (11) with a small time constant (T1) in order to obtain a first output signal (hₛ) , and with a second low-pass filter (12) with a relatively large time constant (T2) in order to obtain a second output signal (hᵢ), and these output signals are used to calculate the damping speed signals (v_{ds}, v_{dl}).

7. Method according to one of Claims 1 to 3, in which the distance signal (hᵢ) is filtered with a first low-pass filter (11) with a small time constant (T1) in order to obtain a first output signal (hₛ) , and with a second low-pass filter (12) with a relatively large time constant (T2) in order to obtain a second output signal (hᵢ), in that the absolute value of a difference signal (dₕ) for the difference between the first and second output signal (hₛ; hᵢ) is used as a parameter, and in that on the basis of a defined threshold value of the difference signal (dₕ) a selection is made as to which of the damping speed signals (v_{ds}; v_{dl}) is used as the basis for the closed-loop or open-loop control of the damping force.

8. Method according to Claim 7, in which, when a threshold value for the absolute value of the difference signal (dₕ) is exceeded, the first damping speed signal (v_{ds}) is used as the basis for the closed-loop or open-loop control of the damping force (F_{D}), and otherwise the second damping speed signal (v_{dl}) is used as the basis for the closed-loop or open-loop control of the damping force (F_{D}) .

9. Method according to Claim 7 or 8, in which the relatively small time constant (T1) is 0.25 msec to 2.5 msec, and the relatively large time constant (T2) is 2.5 msec to 25 msec.

10. Method according to Claims 5 and 8, in which, when the threshold value for the absolute value of the difference signal (dₕ) is exceeded and when the threshold value, defined as a parameter, of the absolute value of the first damping speed signal (v_{ds}) is exceeded, the first damping speed signal (v_{ds}) is used as the basis for the closed-loop or open-loop control of the damping force (F_{D}), and otherwise the second damping speed signal (v_{dl}) is used as the basis for the closed-loop or open-loop control of the damping force (F_{D}) .

11. Method according to Claims 1 to 10, in which the damping force (F_{D}) is controlled in a closed-loop fashion in accordance with the skyhook method, in accordance with the ground hook method or in accordance with a combination of these methods.

12. Method according to Claim 11, in which the damping speed (V_{DK}) is used for the calculation of the inverse damping characteristic diagram (4), and the vehicle body speed (V_{A}) is obtained by integrating a signal of an acceleration sensor arranged on the vehicle body.

13. Method according to Claim 11, in which the damping speed (V_{DK}) is used for the calculation of the inverse damping characteristic diagram (4), and the vehicle body speed (V_{A}) is obtained from a damping speed signal (v_{dl}) with the wheel speed component filtered out.

14. Method according to Claim 13, in which the second damping speed signal (v_{dl}) according to Claim 4 or 5 is used as the damping speed signal.

15. Method according to one of the preceding claims, in which oscillations with a low frequency below 2 Hz of the distance signal (hᵢ) are filtered out by means of a high-pass filter (15).

16. Method according to Claim 15, in which the damping speed signal (v_{dl}) is additionally used for the calculation of the inverse damping characteristic diagram if the output signal of the high-pass filter (15) exceeds a limiting value.

## Revendications

1. Procédé pour réguler ou commander la force d'amortissement d'amortisseurs réglables dans des véhicules, notamment dans des véhicules automobiles, comprenant des systèmes d'amortissement actifs ou semi-actifs, dans lequel la régulation ou la commande s'effectue en fonction de la vitesse d'amortissement (V_{DK}) et les signaux de vitesse d'amortissement (V_{dl}, V_{ds}) sont détectés au moyen de capteurs de distance et d'une différenciation des signaux de capteurs de distance (hᵢ) sur un intervalle de temps établi, **caractérisé en ce qu'**un premier signal de vitesse d'amortissement (V_{ds}) est détecté par le biais de la différenciation du signal de distance (hᵢ) sur un premier intervalle de temps et un deuxième signal de vitesse d'amortissement (V_{dl}) est détecté par le biais de la différenciation du signal de distance (hᵢ) sur un deuxième intervalle de temps, **en ce que** le premier intervalle de temps est inférieur au deuxième intervalle de temps et **en ce que** l'on fait un choix, sur la base de paramètres établis, pour décider lequel des signaux de vitesse d'amortissement (V_{ds} ; V_{dl}) est pris pour base pour la régulation ou la commande de la force d'amortissement (F_{D}).

2. Procédé selon la revendication 1, dans lequel la vitesse d'amortissement (V_{dl}, V_{ds}) est détectée séparément pour chaque composant à amortir.

3. Procédé selon la revendication 1 ou 2, dans lequel les capteurs de distance mesurent la distance entre une roue et la carrosserie du véhicule.

4. Procédé selon l'une quelconque des revendications précédentes, dans lequel le premier signal de vitesse d'amortissement (V_{ds}) est formé sur un intervalle de temps de 0,5 ms à 5 ms, et le deuxième signal de vitesse d'amortissement (V_{dl}) est formé sur un intervalle de temps de 5 ms à 50 ms.

5. Procédé selon la revendication 4, dans lequel on utilise comme paramètre une valeur seuil établie de l'amplitude du premier signal de vitesse d'amortissement (V_{ds}) et en cas de dépassement de la valeur seuil, on prend pour base le premier signal de vitesse d'amortissement (V_{ds}), et sinon le deuxième signal de vitesse d'amortissement (V_{dl}) pour la régulation ou la commande de la force d'amortissement (F_{D}).

6. Procédé selon l'une quelconque des revendications 4 ou 5, dans lequel le signal de distance (hᵢ) est filtré avec un premier filtre passe-bas (11) de petite constante de temps (T1) pour détecter un premier signal de sortie (hₛ) et avec un deuxième filtre passe-bas (12) de plus grande constante de temps (T2) pour détecter un deuxième signal de sortie (hₗ), et ces signaux de sortie sont utilisés pour calculer les signaux de vitesse d'amortissement (V_{ds}, V_{dl}) .

7. Procédé selon l'une quelconque des revendications 1 à 3, dans lequel le signal de distance (hᵢ) est filtré avec un premier filtre passe-bas (11) de petite constante de temps (T1) pour détecter un premier signal de sortie (hₛ) et avec un deuxième filtre passe-bas (12) de plus grande constante de temps (T2) pour détecter un deuxième signal de sortie (hᵢ), en ce que l'on utilise comme paramètre l'amplitude d'un premier signal différentiel (dₕ) entre le premier et le deuxième signal de sortie (hₛ ; hᵢ) et en ce qu'à l'aide d'une valeur seuil établie du signal différentiel (dₕ), on fait un choix, pour décider lequel des signaux de vitesse d'amortissement (V_{ds}, V_{dl}) est pris pour base pour la régulation ou la commande de la force d'amortissement.

8. Procédé selon la revendication 7, dans lequel, en cas de dépassement d'une valeur seuil pour l'amplitude du signal différentiel (dₕ), on prend pour base le premier signal de vitesse d'amortissement (V_{ds}) et sinon le deuxième signal de vitesse d'amortissement (V_{dl}) pour la régulation ou la commande de la force d'amortissement (F_{D}).

9. Procédé selon la revendication 7 ou 8, dans lequel la plus petite constante de temps (T1) vaut 0,25 ms à 2,5 ms et la plus grande constante de temps (T2) vaut 2,5 ms à 25 ms.

10. Procédé selon les revendications 5 et 8, dans lequel, en cas de dépassement de la valeur seuil pour l'amplitude du signal différentiel (dₕ), et de la valeur seuil établie comme paramètre de l'amplitude du premier signal de vitesse d'amortissement (V_{ds}), on prend pour base le premier signal de vitesse d'amortissement (V_{ds}) et sinon le deuxième signal de vitesse d'amortissement (V_{dl}) pour la régulation ou la commande de la force d'amortissement (FD).

11. Procédé selon les revendications 1 à 10, dans lequel la force d'amortissement (F_{D}) est régulée conformément au procédé Skyhook, au procédé Groundhook, ou suivant une combinaison de ces procédés.

12. Procédé selon la revendication 11, dans lequel la vitesse d'amortissement (V_{DK}) est utilisée pour le calcul du champ caractéristique d'amortissement inverse (4) et la vitesse de carrosserie (V_{A}) est détectée à partir de l'intégration d'un signal d'un capteur d'accélération disposé sur la carrosserie.

13. Procédé selon la revendication 11, dans lequel la vitesse d'amortissement (V_{DK}) est utilisée pour le calcul du champ caractéristique d'amortissement inverse (4) et la vitesse de carrosserie (V_{A}) est détectée à partir d'un signal de vitesse d'amortissement (V_{dl}) avec une proportion de vitesse de roue éliminée par filtrage.

14. Procédé selon la revendication 13, dans lequel le signal de vitesse d'amortissement utilisé est le deuxième signal de vitesse d'amortissement (V_{dl}) selon la revendication 4 ou 5.

15. Procédé selon l'une quelconque des revendications précédentes, dans lequel, au moyen d'un filtre passe-haut (15), on élimine par filtration les oscillations de basse fréquence en dessous de 2 Hz hors du signal de distance (hᵢ).

16. Procédé selon la revendication 15, dans lequel on utilise pour le calcul du champ caractéristique d'amortissement inverse en outre le signal de vitesse d'amortissement (V_{dl}) lorsque le signal de sortie du filtre passe-haut (15) dépasse une valeur limite.
